# DEMANDE DE BREVET EUROPEEN

(11) **EP 4 580 006 A1**
(43) Date de publication de la demande: **02.07.2025**
(21) Numéro de dépôt: 24219209.4
(22) Date de dépôt: 11.12.2024
(51) Int. Cl.: H02K 1/30, H02K 9/06

(54) **ROTOR DE MACHINE ÉLECTRIQUE TOURNANTE ET ENSEMBLE RALENTISSEUR ÉLECTROMAGNÉTIQUE ET GÉNÉRATRICE**

(30) Priorité: 27.12.2023 FR 2315350
(71) Demandeur: Telma, 95310 Saint-Ouen L'Aumône (FR)
(72) Inventeur: AKAFOU, Mbarek, 78130 LES MUREAUX (FR); LOUNIS, Rafik, 95800 CERGY (FR); QUENNET, Nicolas, 95240 CORMEILLES EN PARISIS (FR); BELANCE, Romuald, 95170 DEUIL LA BARRE (FR)
(74) Mandataire: Plasseraud IP

(57) **Abrégé**

L'invention concerne un rotor (2) de machine électrique tournante, le rotor comportant :
- une bague centrale (4) destinée à être montée autour d'un arbre rotatif ;
- un corps cylindrique (6) ayant une face interne (10) disposée en regard de la bague centrale, une face externe (12) opposée à la face interne et une face latérale de fixation(14) , le corps cylindrique étant coaxial à la bague centrale ;
- un bras de fixation (8) raccordé à la bague centrale et à la face latérale de fixation du corps cylindrique.

La face externe du corps cylindrique comporte un bord adjacent à la face latérale de fixation, dit premier bord (18) ; ledit premier bord comprend une pente inclinée vers l'axe de rotation (X-X).

L'invention concerne également un ensemble ralentisseur électromagnétique et génératrice.

## Description

### Domaine technique de l'invention

L'invention concerne un rotor de machine tournante et en particulier un rotor de ralentisseur électromagnétique pour véhicule. L'invention concerne également un ensemble ralentisseur électromagnétique et génératrice.

### Etat de la technique antérieure

Il est connu un rotor d'un ensemble ralentisseur électromagnétique et génératrice comportant une bague centrale destinée à être montée sur un arbre rotatif, un flasque latéral et un corps cylindrique coaxial à la bague centrale. Le flasque est constitué par une plaque en forme d'anneau qui relie la bague intérieure au corps cylindrique. Le corps cylindrique constitue l'induit du ralentisseur.

Un tel rotor est décrit dans la demande de brevet FR 18 55 848 déposée au nom de la demanderesse. Toutefois, le corps cylindrique peut se déformer après un grand nombre d'utilisation en raison du fait qu'il soit soumis à des températures importantes. Il serait souhaitable de refroidir davantage l'induit de ce rotor

### Présentation de l'invention

Il serait souhaitable de proposer un rotor qui ne se déforme pas au cours du temps sous l'effet de la chaleur. Il serait souhaitable d'améliorer le refroidissement du corps cylindrique.

### Résumé de l'invention

La présente invention a pour objet un rotor de machine électrique tournante, en particulier de ralentisseur électromagnétique pour véhicule, le rotor étant propre à tourner autour d'un axe de rotation selon un sens de rotation, l'axe de rotation s'étendant selon une direction axiale, le rotor comportant :
- une bague centrale destinée à être montée autour d'un arbre rotatif ;
- un corps cylindrique ayant une face interne disposée en regard de la bague centrale, une face externe opposée à la face interne et une face latérale de fixation , le corps cylindrique étant coaxial à la bague centrale;
- au moins un bras de fixation raccordé à la bague centrale et à la face latérale de fixation du corps cylindrique,
caractérisé en ce que la face externe du corps cylindrique comporte un bord adjacent à la face latérale de fixation, dit premier bord ; ledit premier bord comprend une pente inclinée vers l'axe de rotation.

Avantageusement, cette pente permet d'augmenter la quantité d'air passant au - dessus de la surface externe du corps cylindrique. La quantité d'air entrant dans les canaux de refroidissement est augmentée. Comme l'air a été introduite dans les canaux de refroidissement par une ouverture plus large, la vitesse de passage de l'air dans les canaux de refroidissement est augmentée.

Les caractéristiques exposées dans les paragraphes suivants peuvent, optionnellement, être mises en oeuvre. Elles peuvent être mises en oeuvre indépendamment les unes des autres ou en combinaison les unes avec les autres :
- la pente est inclinée d'un angle compris entre 10 degrés et 30 degrés par rapport à l'axe de rotation.
- Le rotor comporte en outre une couronne coaxiale au corps cylindrique, la couronne est agencée autour du corps cylindrique ; la couronne comprend une extrémité latérale en retrait de la face latérale de fixation selon la direction axiale, l'extrémité latérale de la couronne étant éloignée de la face latérale de fixation d'une distance supérieure 15 millimètres, ladite distance étant mesurée selon la direction axiale.
- La pente présente une largeur selon la direction axiale ; et dans lequel la largeur de la pente est supérieure à la distance entre l'extrémité latérale et la face latérale de fixation.
- Le rotor comporte en outre une pluralité de premières ailettes de refroidissement agencées au moins en partie sur la pente de la face externe du corps cylindrique, les premières ailettes de refroidissement étant disposées parallèlement les unes aux autres, le long du premier bord, les premières ailettes de refroidissement étant bombées et ayant une concavité orientée vers l'avant en considérant le sens de rotation du rotor.
- La face externe du corps cylindrique comporte un deuxième bord opposé au premier bord et dans lequel le rotor comporte en outre une pluralité de deuxièmes ailettes de refroidissement agencées sur une partie de la face externe du corps cylindrique, les deuxièmes ailettes de refroidissement étant disposées parallèlement les unes aux autres, le long du deuxième bord, les deuxièmes ailettes de refroidissement étant bombées et ayant une concavité orientée vers l'arrière en considérant le sens de rotation du rotor.
- Au moins une partie de la face externe du corps cylindrique comprend des reliefs.
- Les reliefs comprennent des ondulations ; lesdites ondulations comprenant une succession de creux et d'arrondies circulaires ayant pour centre un point de l'axe de rotation X-X.

L'invention a également pour objet un Ensemble ralentisseur électromagnétique et génératrice, ledit ensemble comportant un stator et un rotor ; le stator comprenant une face externe et une face interne ; la face externe portant un inducteur de ralentisseur agencé en regard d'une face interne du corps cylindrique ; la face interne portant un induit de génératrice ; le rotor étant conformé selon les caractéristiques mentionnées ci-dessus, le corps cylindrique formant un induit de ralentisseur, la bague centrale comprenant un inducteur de génératrice disposé en regard de la face interne du stator.

### Brève description des figures

[Fig. 1] est une vue en perspective d'une partie d'un rotor selon l'invention ;
[Fig. 2] est une vue en coupe radiale du rotor illustré sur la figure 1 ;
[Fig. 3] est une vue schématique d'une section du corps cylindrique et de la couronne, le plan de coupe étant un plan radial ;
[Fig. 4] est une vue de dessus d'une partie du rotor illustré sur la figure 1 ;
[Fig. 5] est une vue schématique en coupe radiale d'une partie d'un ensemble ralentisseur électromagnétique et génératrice comprenant un rotor illustré sur la figure 1.

### Description détaillée de l'invention

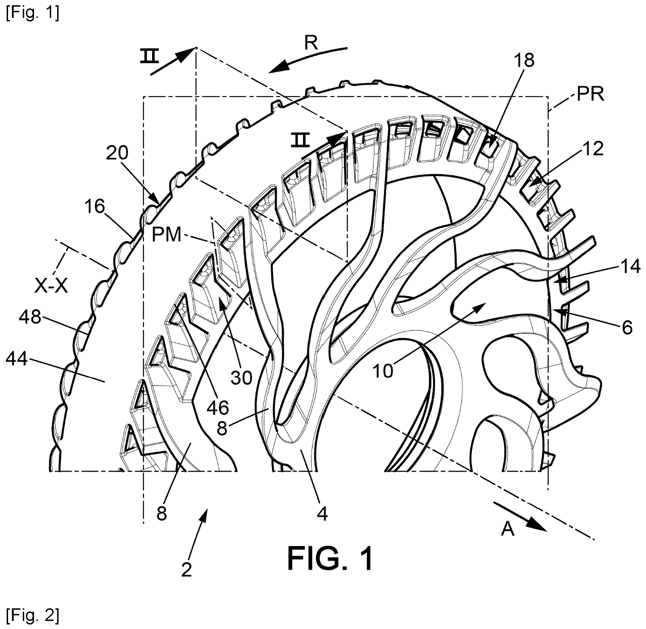

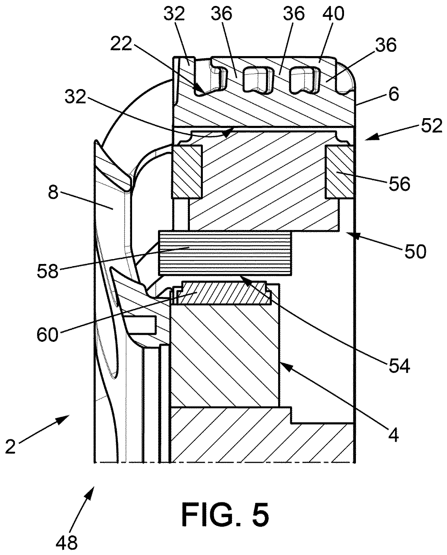

En référence à la figure 1, l'invention concerne un rotor 2 de machine électrique tournante. Par exemple, le rotor 2 est un rotor de ralentisseur électromagnétique pour véhicule. En particulier, ce rotor peut être monté dans un ensemble ralentisseur électromagnétique et génératrice tel qu'illustré sur la figure 5.

Le rotor 2 est propre à tourner autour d'un axe de rotation X-X s'étendant selon une direction axiale A. Pour les besoins de la présente description, on définit un plan radial PR perpendiculaire à l'axe de rotation X-X.

Le rotor 2 comporte une bague centrale 4 destinée à être fixée à un arbre rotatif non représenté, un corps cylindrique 6 et des bras de fixation 8 raccordés à la bague centrale et au corps cylindrique.

La bague centrale 4 et le corps cylindrique 6 sont coaxiaux.

Le corps cylindrique 6 comprend une face interne 10 disposée en regard de la bague centrale, une face externe 12 opposée à la face interne, une face latérale de fixation 14 et une face latérale 16 opposée à la face latérale de fixation.

Dans l'exemple illustré à titre d'exemple et nullement limitatif, le rotor 2 comporte dix bras de fixation. Les bras de fixation 8 sont régulièrement répartis autour de la bague centrale.

La face externe 12 du corps cylindrique comporte un bord adjacent à la face latérale de fixation, dit premier bord 18 et un bord disposé du côté opposé, dit deuxième bord 20.

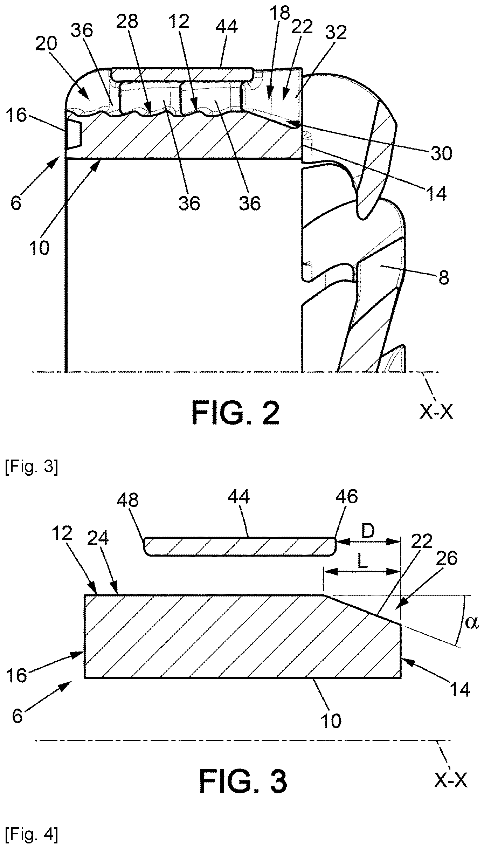

En référence aux figures 2 et 3, le premier bord 18 comprend une pente 22 inclinée vers l'axe de rotation X-X.

La pente 22 est inclinée d'un angle α compris entre 10 degrés et 30 degrés par rapport à l'axe de rotation X-X.

La pente 22 présente une largeur L selon la direction axiale A.

Ainsi, en référence à la figure 3, la face externe 12 du corps cylindrique comprend une portion 24 ayant une forme générale de cylindre et une portion 26 ayant la forme d'un tronc de cône. La portion 26 en forme de tronc de cône est adjacente à la face latérale de fixation 14.

Avantageusement, la pente 22 permet d'augmenter la quantité d'air passant au - dessus la surface externe du corps cylindrique. En conséquence, la quantité d'air entrant dans les canaux de refroidissement 30 est augmentée car l'ouverture permettant l'introduction de l'air est plus large. Comme une plus grande quantité d'air est introduite dans les canaux de refroidissement, la vitesse de passage de l'air dans les canaux de refroidissement est augmentée.

De préférence, la portion 24 ayant une forme générale de cylindre comprend des reliefs 28 représentés uniquement sur la figure 2. En particulier, dans le mode de réalisation illustré à titre d'exemple, les reliefs 28 comprennent des ondulations. Les ondulations comprennent une succession de creux circulaires et d'arrondies circulaires ayant pour centre un point de l'axe de rotation X-X.

Selon une variante non représentée, les reliefs 28 comprennent des bossages, des enfoncements ou des rugosités.

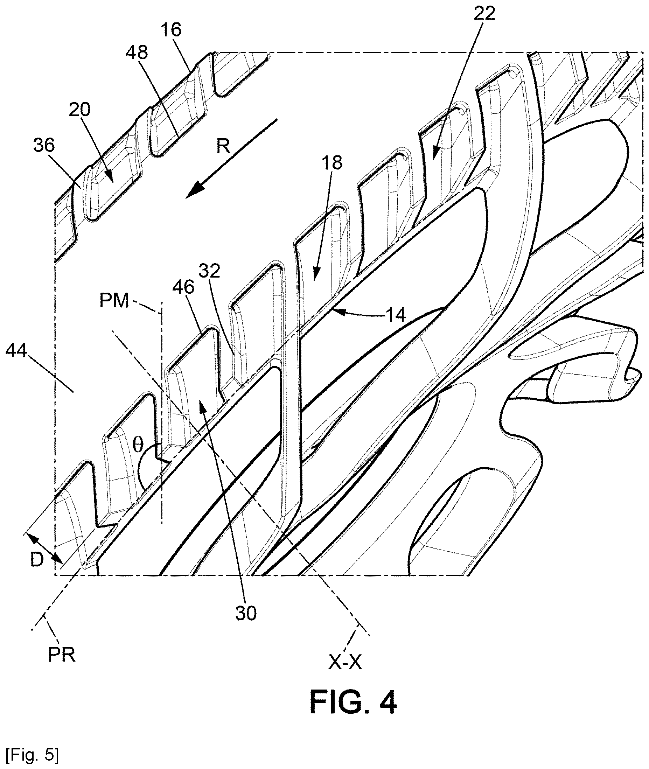

Avantageusement, ces reliefs 28 créent des perturbations dans la couche d'air passant au-dessus de la face externe du corps cylindrique. Ces perturbations permettent d'augmenter le refroidissement du corps cylindrique 6. Avantageusement, la portion 26 en forme de tronc de cône, ou dit autrement la pente 22, est lisse. Elle ne comporte pas de reliefs. Cette surface lisse permet d'augmenter la quantité d'air et la vitesse de l'air entrant dans les canaux de refroidissement 30. En référence aux figures 2 et 4, le corps cylindrique 6 comprend de préférence, une pluralité de premières ailettes de refroidissement 32 agencées au moins en partie sur la pente 22 de la face externe 12 du corps cylindrique. Les premières ailettes de refroidissement présentent une forme de lamelle. Le plan médian PM des premières ailettes de refroidissement 38 est orienté selon un angle compris entre 40 degrés et 60 degrés par rapport au plan radial PR. De préférence, cet angle θ (thêta) est sensiblement égale à 45 degrés. Les premières ailettes de refroidissement 32 sont bombées. Elles possèdent une concavité orientée vers l'avant en considérant le sens de rotation R du rotor. Autrement dit, un vecteur normal à la face concave est dirigé dans le sens de rotation R. Les premières ailettes de refroidissement 32 sont disposées parallèlement les unes aux autres. Elles sont alignées et forment une première rangée s'étendant le long du premier bord 18.

De préférence, le corps cylindrique 6 comprend en outre une pluralité de deuxièmes ailettes de refroidissement 36 agencée sur la portion cylindrique de la face externe du corps cylindrique. Les deuxièmes ailettes de refroidissement 36 présentent une forme de lamelle. Les deuxièmes ailettes de refroidissement 36 sont bombées. Elles possèdent une concavité orientée vers l'arrière en considérant le sens de rotation R du rotor. Autrement dit, un vecteur normal à la face concave est dirigé dans un sens opposé au sens de rotation R.

Les deuxièmes ailettes de refroidissement 36 sont disposées parallèlement les unes aux autres. Les deuxièmes ailettes de refroidissement 36 sont également parallèles aux premières ailettes de refroidissement 32. Elles sont alignées et forment une deuxième rangée qui s'étend le long du deuxième bord 20.

Dans le mode de réalisation illustré et nullement limitatif, le corps cylindrique 6 comprend une troisième rangée et une quatrième rangée d'ailettes de refroidissement 36, visible sur la figure 2. Les ailettes de refroidissement de la troisième rangée et de la quatrième rangée sont identiques et orientées de la même façon que les ailettes de refroidissement 36 de la deuxième rangée. En particulier, leur face concave est orientée de la même manière que les ailettes de refroidissement de la deuxième rangée. Elles portent la même référence 36 et ne sont pas décrites à nouveau.

De préférence, le rotor 2 comporte en outre une couronne 44 coaxiale au corps cylindrique 6. La couronne 44 est agencée autour du corps cylindrique. La couronne 44 présente une largeur inférieure à la largeur du corps cylindrique. Elle est disposée au-dessus d'une partie centrale du corps cylindrique. La couronne 44 coiffe les ailettes de refroidissement 36 de la troisième rangée, les ailettes de refroidissement 36 de la quatrième rangée, une partie des ailettes de refroidissement 32 de la première rangée et une partie des ailettes de refroidissement 36 de la deuxième rangée. Les ailettes de refroidissement 32, 36 forment avec la couronne 44 des canaux de refroidissement 30, visible sur la figure 1.

La couronne 44 comprend une première extrémité latérale 46 située du côté de la face latérale de fixation 14 et une deuxième extrémité latérale 38 du côté opposé. La première extrémité latérale 46 est agencée en retrait selon la direction axiale A de la face latérale de fixation 14 du corps cylindrique. L'extrémité latérale 46 de la couronne est éloignée de la face latérale de fixation 14 d'une distance D supérieure 15 millimètres. De préférence, cette distance D est comprise entre 15 et 30 millimètres. Cette distance D est mesurée selon la direction axiale.

En référence aux figures 3 et 4, la pente 22 présente, de préférence, une largeur L selon la direction axiale A. La largeur L de la pente est supérieure à la distance D entre la première extrémité latérale 46 et la face latérale de fixation 14.

Dans le mode de réalisation illustré sur les figures et nullement limitatif, la deuxième extrémité latérale 48 est également agencée en retrait selon la direction axiale A de la face latérale 16 du corps cylindrique.

En référence à la figure 5, l'invention concerne également un ensemble 48 ralentisseur électromagnétique et génératrice. Cet ensemble comporte un rotor 2 et un stator 50. Le rotor 2 est conformé selon les caractéristiques mentionnées ci-dessus.

Le stator 50 comprend une face externe 52 et une face interne 54. La face externe 52 porte un inducteur de ralentisseur 56 agencé en regard d'une face interne 10 du corps cylindrique. La face interne 54 porte un induit de génératrice 58. Le corps cylindrique 6 du rotor 2 forme un induit de ralentisseur. La bague centrale 4 comprend un inducteur de génératrice 60 disposé en regard de la face interne 54 du stator.

## Revendications

1. Rotor (2) de machine électrique tournante, en particulier de ralentisseur électromagnétique pour véhicule, le rotor (2) étant propre à tourner autour d'un axe de rotation (X-X) selon un sens de rotation (R), l'axe de rotation s'étendant selon une direction axiale (A), le rotor (2) comportant :
- une bague centrale (4) destinée à être montée autour d'un arbre rotatif ;
- un corps cylindrique (6) ayant une face interne (10) disposée en regard de la bague centrale, une face externe (12) opposée à la face interne et une face latérale de fixation(14) , le corps cylindrique (6) étant coaxial à la bague centrale (4);
- au moins un bras de fixation (8) raccordé à la bague centrale (4) et à la face latérale de fixation du corps cylindrique,
**caractérisé en ce que** la face externe (12) du corps cylindrique comporte un bord adjacent à la face latérale de fixation, dit premier bord(18) ; ledit premier bord (18) comprend une pente (22) inclinée vers l'axe de rotation (X-X).

2. Rotor (2) selon la revendication 1, dans lequel ladite pente (22) est inclinée d'un angle (α) compris entre 10 degrés et 30 degrés par rapport à l'axe de rotation (X-X).

3. Rotor (2) selon l'une quelconque des revendications 1 et 2, qui comporte en outre une couronne (44) coaxiale au corps cylindrique (6), la couronne (44) est agencée autour du corps cylindrique ; la couronne (44) comprend une extrémité latérale (46) en retrait de la face latérale de fixation (14) selon la direction axiale (A), l'extrémité latérale (46) de la couronne étant éloignée de la face latérale de fixation (14) d'une distance (D) supérieure 15 millimètres, ladite distance (D) étant mesurée selon la direction axiale (A).

4. Rotor (2) selon la revendication 3, dans lequel la pente (22) présente une largeur (L) selon la direction axiale (A) ; et dans lequel ladite largeur (L) de la pente est supérieure à la distance (D) entre l'extrémité latérale (46) et la face latérale de fixation (14).

5. Rotor (2) selon l'une quelconque des revendications 1 à 4, qui comporte en outre une pluralité de premières ailettes de refroidissement (32) agencées au moins en partie sur la pente de la face externe (12) du corps cylindrique, les premières ailettes de refroidissement (32) étant disposées parallèlement les unes aux autres, le long du premier bord (18), les premières ailettes de refroidissement (32) étant bombées et ayant une concavité orientée vers l'avant en considérant le sens de rotation (R) du rotor.

6. Rotor (2) selon la revendication 5, dans lequel la face externe (12) du corps cylindrique comporte un deuxième bord (20) opposé au premier bord (18) et dans lequel le rotor comporte en outre une pluralité de deuxièmes ailettes de refroidissement (36) agencées sur une partie de la face externe (12) du corps cylindrique, les deuxièmes ailettes de refroidissement (36) étant disposées parallèlement les unes aux autres, le long du deuxième bord (20), les deuxièmes ailettes de refroidissement (36) étant bombées et ayant une concavité orientée vers l'arrière en considérant le sens de rotation (R) du rotor.

7. Rotor (2) selon l'une quelconque des revendications 1 à 6, dans lequel au moins une partie de la face externe (12) du corps cylindrique comprend des reliefs (28).

8. Rotor (2) selon la revendication 7, dans lequel les reliefs (28) comprennent des ondulations ; lesdites ondulations comprenant une succession de creux et d'arrondies circulaires ayant pour centre un point de l'axe de rotation X-X.

9. Ensemble (48) ralentisseur électromagnétique et génératrice, ledit ensemble comportant un stator (50) et un rotor (2) ; le stator (50) comprenant une face externe (52) et une face interne (54) ; la face externe (52) portant un inducteur de ralentisseur (56) agencé en regard d'une face interne (10) du corps cylindrique ; la face interne (54) portant un induit de génératrice (58) ; le rotor étant conformé selon l'une quelconque des revendications 1 à 8, le corps cylindrique (6) formant un induit de ralentisseur, la bague centrale (4) comprenant un inducteur de génératrice (60) disposé en regard de la face interne (54) du stator.
